# FASCICULE DE BREVET EUROPEEN

(11) **EP 2 376 938 B1**
(45) Date de publication et mention de la délivrance du brevet: **21.08.2013**
(21) Numéro de dépôt: 09802188.4
(22) Date de dépôt: 16.12.2009
(51) Int. Cl.: F03D 11/00, G01S 7/41, G01S 13/88, G01S 13/56, G01S 13/87, G01S 13/93, F03D 7/00

(54) **PROCEDE DE DETECTION D'UN OISEAU OU OBJET VOLANT**
VERFAHREN ZUM DETEKTIEREN EINES VOGELS ODER EINES FLIEGENDEN OBJEKTS
METHOD FOR DETECTING A BIRD OR A FLYING OBJECT

(30) Priorité: 16.12.2008 FR 0807080; 03.03.2009 FR 0951329
(43) Date de publication de la demande: 19.10.2011
(73) Titulaire: Roche, Henri-Pierre, 34500 Beziers (FR)
(72) Inventeur: Roche, Henri-Pierre, 34500 Beziers (FR)
(74) Mandataire: Rhein, Alain
(86) Numéro de dépôt international: PCT/FR2009/052566
(87) Numéro de publication internationale: WO 2010/076500

(56) Documents cités:
- DE-A1-102005 046 860
- DE-A1-102007 004 027
- DE-A1-102007 025 314
- DE-U1-202004 006 595
- US-A1- 2002 140 597
- DESHOLM M ET AL: "remote techniques for counting and estimating the number of bird-wind turbine collisions at sea: a review" IBIS, WILEY-BLACKWELL PUBLISHING LTD, GB, vol. 148, 1 janvier 2006 (2006-01-01), pages 76-89, XP002528059 ISSN: 0019-1019

## Description

La présente invention entre dans le domaine ornithologique, dans le cadre de la préservation des espèces d'oiseaux ou autres animaux volants aux abords de site industriel.

L'invention trouvera une application toute particulière dans la détection d'oiseau au sein de parc industriel de production énergétique de type éolien et la prévention des collisions d'oiseaux contre les pales en mouvement des éoliennes industrielles de production électrique.

Les éoliennes industrielles causent une mortalité non négligeable d'oiseaux par collision avec les pales, plus précisément au niveau de leur extrémité libre. La Ligue pour la Protection des Oiseaux (LPO) estime ainsi que les mortalités s'élèvent de 0.01 à 36 oiseaux par éolienne et par an, toutes espèces confondues.

Pour la très grande majorité des petites espèces d'oiseaux (par exemple la famille des passereaux ou des apodidés, tel le martinet) qui peuvent entrer en collision avec les pales des éoliennes, l'importance de leur population rend négligeable ce taux de mortalité comparativement à d'autres sources de mortalité : trafic routier, lignes électriques et aériennes, prédateurs, notamment les animaux domestiques, (chat, chien, etc.).

La situation est cependant différente concernant les espèces de grande taille, tels les rapaces (aigles, vautours, milans ou analogue) ou d'autres grands voiliers (cigognes ou autre). En effet, ces espèces présentent de faibles populations avec un taux de reproduction peu élevé. Par conséquent, la mortalité supplémentaire liée aux éoliennes devient alors significative pour ces espèces et sa réduction est un véritable en jeu, d'autant plus que ces espèces sont rares, en mauvais état de conservation ou font l'objet d'engagements nationaux et internationaux de protection.

Une analyse des recherches menées sur les cas de mortalité d'espèces d'oiseaux patrimoniaux par collision avec des éoliennes montrent tout d'abord que la répartition géographique des cas de mortalité recouvre de nombreux endroits du globe : Europe du Nord (pygargue à queue blanche), Allemagne (milan royal), Ecosse (aigles royaux), Espagne (vautour fauve, vautour percnoptère, cigogne blanche, cigogne noire), Etats-Unis d'Amérique (aigles royaux), Australie (wedged tailed eagle), France (cigogne blanche) ou Japon (sea eagle).

D'autre part, ces espèces montrent une grande confiance face aux éoliennes en rotation (vautours et milans). Elles peuvent voler dans l'espace balayé par les pales, autant dans de bonnes conditions météorologique que par mauvaise visibilité, tels les aigles en Ecosse. Certaines espèces (milan royal, aigle royal, pygargue à queue blanche) fréquentent même activement les parcs éoliens pour se nourrir des cadavres d'autres oiseaux entrés en collision avec les pales.

De plus, les risques de collision sont d'autant plus élevés sur les axes principaux de déplacement présentant généralement des particularités situationnelles : relief, exposition, conditions de vent. Ces particularités sont recherchées par les oiseaux car elles facilitent leurs déplacements, formant des zones d'ascendance thermique ou d'ascendance orographique. Les risques de collision augmentent aussi considérablement à proximité des sites d'alimentation ou de reproduction qui concentrent un grand nombre d'oiseaux.

On notera que les collisions interviennent le plus souvent entre la partie distale des pales et les extrémités corporelles des oiseaux (tête, queue et au niveau du bout de l'aile). Par conséquent, une hypothèse posée est que plus les oiseaux sont proches des éoliennes, moins ils anticipent la vitesse de rotation des pales, l'extrémité de ces dernières pouvant atteindre des vitesses jusqu'à 200 km/h.

L'importance de ces mortalités sur des espèces considérées comme patrimoniales constitue un frein non négligeable aux développements et à l'exploitation des parcs éoliens, ayant d'ores et déjà entraînée une cause d'arrêts temporaires ou définitifs des machines aux Etats-Unis (Altamont Pass, Californie) ou en Espagne, une surveillance permanente des parcs éoliens par des ornithologues (Australie) ou bien une annulation de projets d'implantation (Allemagne). Ces arrêts et les contentieux les accompagnant fragilisent les investissements financiers liés au développement de l'énergie éolienne renouvelable, tant du point de vue du développement que de l'exploitation des parcs éoliens.

Une solution consistant à adapter le design des éoliennes et leur implantation dans des sites accueillant des espèces rares, reste une démarche peu fructueuse, d'une part, en raison des fondements théoriques balbutiants sur le déterminisme et le fonctionnement des déplacements des oiseaux et, d'autre part, car ces déplacements dans le temps et l'espace gardent une part significative de stochasticité liée à la dynamique propre des espèces et des individus.

Afin de concilier le développement éolien et la conservation de la biodiversité, des méthodes et dispositifs de détection ont été développés permettant de stopper les éoliennes en cas de risque imminent de collision avec une espèce patrimoniale.

Les systèmes les plus efficaces comprennent des moyens de détection et d'estimation de la distance par ondes radio, à savoir des radars (pour « RAdio Détection And Ranging »), pour surveiller les parcs éoliens. De plus, la détection par radar a d'ores et déjà été largement utilisée par les ornithologues pour l'étude des déplacements d'oiseaux, notamment au moment des migrations.

On notera que les radars sont usuellement utilisés pour la détection et la mesure de distance d'objets dans l'espace par émission et réception d'ondes électromagnétiques hyperfréquences. Les modalités d'exécution et les applications pratiques sont actuellement très variées, mais les dispositifs les plus usités et les plus accessibles financièrement sont actuellement les radars type « marine ». Ces derniers sont généralement des radars rotatifs, à impulsion en bande X, S ou L, d'angle de hauteur de faisceau d'environ 20°. Ils sont généralement utilisés dans le plan horizontal, à savoir que la médiane de l'angle vertical du faisceau d'émission est parallèle à l'horizon.

En pratique, les objets détectés dans le faisceau d'émission des ondes radars sont projetés sur la médiane de l'angle vertical dudit faisceau d'émission. Lesdits objets détectés sont alors représentés sous forme d'un ou de plusieurs échos dans un plan en deux dimensions.

Un inconvénient majeur de cette détection réside dans le fait que plus un objet est éloigné de la source d'émission des ondes radars, moins sa détection est fiable. En effet, plus la distance entre l'objet et ladite source augmente, plus l'écho résultant est imprécis en termes de dimensions et de position.

Comme évoqué précédemment, de tels radars ont déjà été utilisés pour la détection d'oiseaux en vol. Trois méthodes de détection sont principalement utilisées dans le cadre ornithologique au moyen d'un seul radar.

Une première méthode positionne la médiane de l'angle vertical du faisceau radar sur un plan parallèle à l'horizon. En utilisant la fonction « trail » des radars, il est possible de cartographier la trajectoire des oiseaux sur un plan horizontal en deux dimensions. Cette technique ne permet cependant pas de connaître l'altitude des oiseaux en vol.

Une deuxième méthode positionne la médiane de l'angle vertical du faisceau radar sur un plan perpendiculaire à l'horizon. Il est alors possible de déterminer l'altitude des oiseaux par rapport au sol, mais aucunement de connaître leurs trajectoires.

Enfin, la dernière méthode positionne la médiane de l'angle vertical du faisceau radar de manière inclinée, selon un angle variable, généralement de 45° par rapport l'horizon. Théoriquement, ce positionnement permet d'indiquer les altitudes et la direction de déplacement des oiseaux. Pratiquement, il reste cependant peu utilisé car il nécessite un traitement mathématique des données pour déterminer l'altitude. De plus, l'espace de détection est plus limité que pour les deux autres méthodes de détection.

D'autres systèmes combinent deux radars, l'un en position verticale, l'autre en position horizontale. Ces systèmes, utilisés sur les aéroports en prévention du risque de collision des oiseaux avec les avions, permettent de connaître, pour un espace donné, les altitudes et les trajectoires des oiseaux. Toutefois, ils ne permettent pas de déterminer spécifiquement l'altitude de chacune des trajectoires enregistrées, et réciproquement.

Ceci étant, l'objectif principal des études ornithologiques utilisant les radars est de détecter le plus loin possible les espèces les plus petites possibles. Pour ce faire, les radars utilisés sont dès lors majoritairement de grande puissance (plusieurs centaines kilowatts, avec des antennes de plus d'un mètre de longueur). De tels radars sont complexes, nécessitant l'assistance quasi-permanente de techniciens, et couteux. Dès lors, ils sont souvent prévus mobiles pour être changés régulièrement d'implantation.

D'autres systèmes de détection sont plus sophistiqués, comme par exemple les radars Doppler ou les radars de traçage (« Tracking Radar Systems »). Ils peuvent être utilisés dans la détection des oiseaux mais n'ont pas à ce jour connu d'application pratique dans cette thématique, du fait de leur coût, de leur technicité élevés et de leurs limites d'utilisation. En effet, les radars de traçage, s'ils peuvent suivre un objet volant en déplacements dans un espace vide, sont par contre brouillés par les pales en mouvement quand l'objet est proche d'une éolienne.

Les techniques et dispositifs susmentionnés sont utilisés pour la détection aux abords d'une ou plusieurs éoliennes, sur terre comme en mer. Toutefois, c'est dans ce dernier contexte maritime que leur implantation est la plus répandue. En effet, sur terre, la capacité de détection des radars de type marine, à longue portée dans le plan horizontal, de plusieurs centaines de mètres à plusieurs kilomètres, est fortement limitée par les zones d'ombre créées par les obstacles solides : sol, reliefs, arbres ou bâtiments.

Cet inconvénient trouve une solution au travers du document US 2002/0140597 qui prévoit la détection d'un objet en mouvement à travers une barrière visuelle opaque et fixe. Pour ce faire, un réseau de plusieurs antennes radars mono-statiques non rotatives est implanté et les données de détection ainsi mesurées sont traitées informatiquement.

Un tel système n'est pourtant pas adapté à la détection aux abords d'une éolienne. En effet, d'une part, les pales des éoliennes sont des objets mobiles simultanément dans les plans horizontaux et verticaux et ne peuvent être considérées comme des barrières statiques dans l'espace. Dès lors, un tel système ne peut pas s'abstenir de détecter lesdites pales et ne peut les distinguer des autres objets éventuels en déplacement. D'autre part, les angles de détection ne couvrent pas l'intégralité du champ balayé par les pales d'une éolienne industrielle.

Par conséquent, se pose le problème de détecter avec une précision suffisante la position dudit oiseau ou objet volant à proximité de l'éolienne pour justifier d'un risque de collision suffisant avec les pales, tel qu'il nécessite que la détection induise automatiquement un freinage et/ou un arrêt du mouvement desdites pales. Cette détection doit donc s'effectuer dans un espace en trois dimensions, au plus à quelques mètres de la sphère potentiellement balayée par les pales, quelle que soit l'orientation du vent et donc la position de rotation desdites pales.

Si les systèmes de détection d'oiseaux par radar tels que décrits précédemment sont largement utilisés pour l'étude du déplacement des oiseaux, ou tout autre objet volant, ils n'ont donc pas les caractéristiques suffisantes et nécessaires pour, à un coût accessible et supportable, répondre à cet objectif. En effet, de tels systèmes souffrent, d'une part, de leur incapacité à positionner fidèlement un même objet en trois dimensions à proximité d'un autre objet en mouvement tel qu'une éolienne, d'autre part, des contingences physiques des ondes radars dont la précision de détection décroit avec la distance et, d'autre part, des contingences environnementales (obstacles physiques et reliefs).

Une solution a toutefois été envisagée en vue de détecter un objet volant à proximité d'une éolienne, dont les pales sont en mouvement, en vue de commander un ralentissement ou un arrêt total de l'éolienne, afin d'éviter la collision dudit objet, dès lors qu'il est suffisamment proche, soit au plus à quelques dizaines de mètres desdites pales. Un telle solution est décrite au travers du document DE 10 2005 046860 qui prévoit la détection d'objets volants, en particulier de chauves-souris, par utilisation de détecteurs d'ultra-sons, fixés sur la nacelle au niveau de la turbine de ladite éolienne, du mât ou des pales à une distance déterminée du centre de rotation desdites pales.

Cependant, les oiseaux n'émettant pas ou peu d'ultra-sons, leur détection s'en trouve grandement limitée. Même si ce document envisage d'utiliser des radars en lieu et place des détecteurs d'ultrasons, il ne précise aucunement leur mode de fonctionnement et les caractéristiques d'un tel système de détection.

D'autres techniques de détection d'objet en vol à proximité d'éoliennes utilisent les détecteurs d'infrarouges ou des caméras thermiques. Dans l'état actuel de la technique ces systèmes ne permettent cependant que d'enregistrer des mouvements d'oiseaux à proximité d'éoliennes et non d'anticiper les collisions des oiseaux contre les pales. De plus, ces systèmes ont encore des champs de détection inférieurs à l'intégralité de l'espace balayé par les pales d'une même éolienne. Même couplés à un système d'arrêt des éoliennes, ils ne peuvent donc prévenir efficacement les collisions.

Enfin, il existe des systèmes de détection sonore de choc d'objets volants contre les éoliennes. Par nature cependant, ces systèmes enregistrent les collisions, mais ne peuvent les prévenir.

Il n'existe de même aucun système permettant de commander le redémarrage de ladite éolienne après l'éloignement suffisant dudit oiseau ou objet volant par rapport à ladite éolienne. Les difficultés d'application des radars dans ce cadre sont telles que sur certains parcs éoliens, en Australie notamment, des ornithologues surveillent visuellement et en continu le déplacement de certaines espèces rares et menacées de disparition, afin de commander manuellement la mise en marche et l'arrêt des éoliennes, évitant ainsi les mortalités par collision.

Les dispositifs de détection connus n'apportent donc pas entière satisfaction. L'invention a pour but de pallier les inconvénients de l'état de la technique en proposant un système de détection et de commande approprié, standardisé et automatisé, dont les coûts de mise en oeuvre restent accessibles et supportables dans le cadre de l'exploitation d'une éolienne industrielle. L'invention offre aussi l'avantage d'une détection d'oiseaux de taille et morphologie variables, quelles que soient les conditions météorologiques, de jour comme de nuit.

A l'inverse des méthodes utilisées actuellement, l'invention vise une surveillance des seuls alentours immédiats d'une seule éolienne et de la zone à risque constituée par le volume balayé par les pales de ladite éolienne, à savoir le volume d'une sphère centrée autour de la turbine. Cette sphère représente le cercle de rotation des extrémités distales des pales de ladite éolienne, ledit cercle étant mis en révolution autour de l'axe vertical de rotation de ladite turbine.

Pour ce faire, l'invention prévoit tout d'abord de détecter le mouvement d'un objet pénétrant dans les alentours immédiats d'une seule éolienne par création, en l'absence dudit objet, d'une image informatique de référence desdits alentours et par analyse du changement d'état de cette image de référence après pénétration de l'objet dans l'espace de surveillance. L'invention prévoit que la même démarche soit appliquée à la zone de risque correspondant à la sphère balayée par les pales en rotation. Alentours et zone de risque s'entendent alors comme étant deux zones particulières et complémentaires de l'aire totale de détection du radar.

De plus, la détection au sens de l'invention envisage une zone de garde en deux dimensions, ayant une résultante en trois dimensions. En effet, la création d'une zone de garde sur une image radar en deux dimensions est une fonction classique des radars. La détection d'un objet ou d'un mouvement dans ladite zone de garde entraîne alors une action, généralement une alarme. Les systèmes susmentionnés n'utilisent que les propriétés de détection de la zone de garde dans l'image en deux dimensions. En d'autres termes, aucun système n'utilise explicitement et spécifiquement la capacité inverse, à savoir que la zone de garde créée en deux dimensions permet de définir théoriquement un volume en trois dimensions dès lors que sont connus les angles horizontaux et verticaux du faisceau d'ondes émis par le radar. Les limites de ce volume sont alors la projection, perpendiculairement à la médiane de l'angle vertical du faisceau d'ondes émis par le radar, des limites en deux dimensions définies sur cette même médiane, sur les limites externes en trois dimensions du même faisceau.

La présente invention a donc pour objectif de définir un dispositif technique standardisé et automatisé, s'appuyant sur la technologie des radars largement répandus de type « marine » permettant de détecter avec la précision suffisante et nécessaire, tout en ayant un coût accessible et supportable dans le cadre de l'exploitation d'une éolienne industrielle terrestre, au moins un oiseau en vol ou tout autre objet volant en déplacement dans l'espace aérien, quelle que soit sa position dans ledit espace, à proximité suffisante, soit quelques mètres, des pales en mouvement d'une éolienne industrielle, quelle que soit les dimensions de ladite éolienne et la position desdites pales dans l'espace. De plus, l'invention se veut à même de déterminer une détection telle que la proximité de cet oiseau ou objet volant soit constitutive d'un risque de collision dudit oiseau ou objet volant contre lesdites pales, nécessitant la commande du freinage ou de l'arrêt du mouvement desdites pales, le temps du passage et/ou de l'éloignement dudit oiseau ou objet volant.

Bien que les oiseaux de petite taille puissent être détectés, l'invention trouvera son application principale dans la détection des espèces patrimoniales, le plus souvent de grande taille, dont la mortalité engendre des impacts environnementaux quant à la préservation des espèces patrimoniales. De plus, techniquement, les moyens mis en oeuvre par la présente invention trouvent leur plus forte tolérance aux échos parasites dans le cadre de détection de cibles dépassant certaines dimensions.

L'invention offre aussi un avantage commercial dans l'exploitation d'un site industriel de production d'énergie éolienne.

En effet, la détection selon l'invention offre l'avantage d'être peu onéreux, fixe et donc dédié au site d'implantation, facile d'installation et d'entretien aisé.

Pour ce faire, l'invention concerne un procédé de détection d'oiseau au niveau d'une seule éolienne, dans lequel on utilise des moyens de détection d'au moins un oiseau ou autre objet volant par ondes radio, sous forme d'au moins un radar, caractérisé en ce qu'il consiste à :
- incliner chaque radar sur son axe horizontal de sorte que la hauteur verticale du faisceau d'ondes émis dans l'axe de ladite éolienne par chaque radar englobe toute ou partie d'une sphère constituée par le volume théorique de balayage des pales en rotation de l'éolienne ;
- transformer l'image analogique résultante en deux dimensions de chaque radar en une image digitale indépendante pour chaque radar ;
- appliquer sur chaque image digitale de chaque radar, d'une part, une zone de garde externe, en deux dimensions dont le centre est positionné sur le centre de la sphère et les dimensions sont supérieures à celles de ladite sphère et, d'autre part, une zone de garde interne de dimensions inférieures ou égales à celles de ladite sphère, créant un volume de garde pour chaque radar ;
- positionner indépendamment chaque radar à une distance de l'éolienne de sorte que les zones de garde de chaque radar se complètent en fonction de la zone globale de garde constituée par la somme des zones de garde respectives de chaque radar ;
- effectuer une action dès détection au sein de l'une ou l'autre desdites zones de garde.

D'autres caractéristiques et avantages de l'invention ressortiront de la description détaillée qui va suivre des modes de réalisation non limitatif de l'invention, en référence aux figures annexées dans lesquelles :
- la figure 1 représente une vue schématique en coupe verticale du dispositif de détection selon l'invention ;
- les figures 2 à 4 représentent des vue schématiques d'étapes successives de la mise en oeuvre du procédé de détection selon l'invention.

La présente invention concerne un système de détection d'oiseau au niveau d'une éolienne 1, et plus particulièrement un procédé de détection d'oiseau ou d'objet volant au niveau d'une seule et unique éolienne 1.

En particulier, cette détection prévoit de détecter toute intrusion d'oiseau au sein d'un espace de surveillance comprenant une sphère 4 constituée par le volume théorique de balayage des pales en rotation de l'éolienne 2, ainsi que les abords d'une telle sphère 4, puis envisager une action, notamment d'intervenir automatiquement sur le fonctionnement de l'éolienne 1 en cas d'intrusion.

On notera que l'intervention peut consister en un ralentissement puis, éventuellement, un arrêt total de la rotation des pales de l'éolienne 1.

Pour ce faire, l'invention prévoit d'utiliser des moyens de détection d'au moins un oiseau ou autre objet volant par ondes radio, sous forme d'au moins un radar 5, notamment deux radars (5).

Plus particulièrement, lesdits radars 5 peuvent être de type « marine », à savoir qu'ils sont rotatifs en bande X, S ou L. De plus, chaque radar 5 peut avantageusement posséder une hauteur verticale de faisceau d'ondes d'au moins 10 degrés, notamment 20 degrés, une puissance inférieure à 10 kilowatts et une antenne d'une longueur inférieure à 1 mètre.

En outre, l'invention prévoit d'incliner chaque radar 5 sur son axe horizontal de sorte que la hauteur verticale du faisceau d'ondes, émis dans l'axe de ladite éolienne 1 par chaque radar 5, englobe toute ou partie de ladite sphère 4.

Selon un mode de réalisation préférentiel, mais aucunement limitatif, chaque radar 5 peut être positionné en hauteur, sur un pylône 6, afin d'éviter l'ombre créée par des objets en déplacement au sol et qui ne subissent aucun risque de collision avec les pales de ladite éolienne 1, tels des véhicules terrestres. Cette élévation aussi permet d'obtenir une couverture du faisceau de chaque radar 5, sans que le sol, le dénivelé éventuel ou d'autres obstacles viennent former de perturbation à la détection.

On notera que l'élévation desdits radars 5 peut consister en l'implantation au niveau d'une autre éolienne située à proximité.

Enfin, chaque radar 5 peut être placé au sol à une distance adéquate, en fonction de la hauteur de son faisceau et de la longueur d'impulsion des trains d'ondes, de manière à détecter des cibles situées en avant et au-delà de l'éolienne 1, et en avant et au-delà de la sphère 4 de rotation de ses pales.

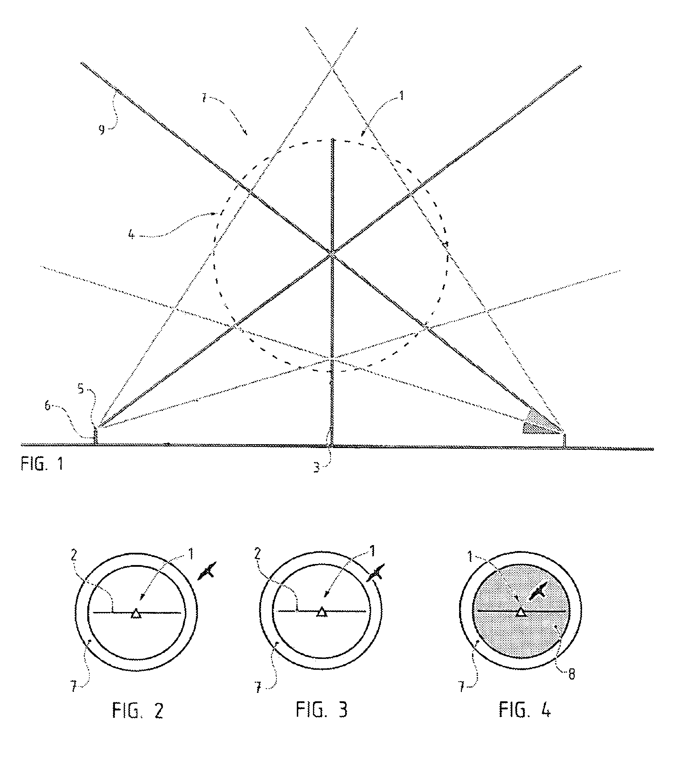

Dans l'exemple de réalisation visible sur la figure 1, on remarque qu'une partie de ladite sphère 4, située en partie basse proche du mât 3, n'est pas couverte par les radars 5. Toutefois, l'accès à cet endroit par un oiseau, ou tout autre objet volant, est limité au passage au travers du reste des faisceaux des radars 5.

Selon une autre caractéristique, le réglage desdits radars 5 peut consister à augmenter la fréquence de récurrence et/ou réduire la longueur d'impulsion. En particulier, la fréquence de récurrence est réglée au maximum pour offrir une détection sur des périodes de temps courtes.

La sensibilité des radars 5 peut aussi être calibrée de manière à ne détecter que des cibles importantes, à savoir ayant des dimensions données, tels des oiseaux de grandes tailles de type aigle, vautour, milan, cigogne ou analogue. Cette calibration évite aussi les échos parasites, tels que la pluie, le brouillard, la neige, les insectes ou les oiseaux de petite taille.

Chaque radar 5 peut être réglé de manière indépendante afin de s'adapter à la configuration de chaque implantation d'éolienne 1.

A titre d'exemple non limitatif, dans le cas d'une éolienne 1 présentant une hauteur de turbine de 75 mètres et d'une hauteur totale en bout de pale 2 de 120 mètres, les radars 5 ont une hauteur verticale de faisceau de 20 degrés, et sont positionnés à une distance de 90 mètres de la base du mât 3. De plus, les radars 5 peuvent être surélevés, installés à une hauteur de 5 mètres de haut. Dès lors, la médiane 9 de la hauteur verticale du faisceau fait un angle d'environ 19° avec l'horizontale.

Une fois cette zone globale de détection déterminée, l'invention prévoit un traitement des images analogiques enregistrées par chaque radar 5.

Avantageusement, l'invention prévoit de transformer l'image analogique résultante en deux dimensions de chaque radar 5 en une image digitale indépendante pour chaque radar 5.

Ensuite, on applique sur chaque image digitale de chaque radar 5, d'une part, une zone de garde externe 7 et, d'autre part, une zone de garde interne 8, créant un volume de garde pour chaque radar 5.

Tout d'abord, ladite zone de garde externe 7 se présente en deux dimensions, notamment sous forme torique, et dont le centre est positionné sur le centre de la sphère 4. Ses dimensions sont supérieures à celles de ladite sphère 4.

Par ailleurs, ladite zone de garde interne 8 est centrée de la même façon mais est de dimensions inférieures ou égales à celles de ladite sphère 4.

Ces zones de garde 7 et 8 peuvent avantageusement être prévues complémentaires, le périmètre intérieur de la zone externe 7 coïncidant avec le périmètre extérieure de la zone interne 8. En d'autres termes, chaque radar 5 est positionné indépendamment à une distance de l'éolienne 1 de sorte que les zones de garde de chaque radar 5 se complètent en fonction de la zone globale de garde constituée par la somme des zones de garde respectives de chaque radar 5.

On notera que cette zone globale de garde peut coïncider ou être de dimensions moindres que l'espace total balayé par lesdits radars 5.

Ainsi, chaque radar 5 est calibré pour que la demi-longueur d'impulsion soit inférieure ou égale à la plus petite distance entre le radar 5 et le périmètre extérieur le plus proche de la zone de garde externe 7 définie pour ce même radar 5.

Ensuite, l'invention effectue une action, notamment une commande sur le fonctionnement de ladite éolienne 1 en fonction des déplacements détectés au sein de l'une puis l'autre des zones de garde 7 et 8.

Comme évoqué précédemment, l'intervention sur le fonctionnement de ladite éolienne 1 peut consister en l'arrêt total de la turbine puis son redémarrage, le ralentissement de la rotation de ses pales 2, notamment par freinage, jusqu'à une vitesse de sécurité permettant l'évitement des pales 2 par les oiseaux. De plus, la durée de ralentissement ou d'arrêt peut être sujette à la détection de l'oiseau dans l'une ou l'autre zone 7 ou 8, en particulier le ralentissement ou l'arrêt sont maintenus tant qu'un mouvement y est détecté. En somme on commande le redémarrage de l'éolienne 1 dès lors qu'aucun n'objet n'est détecté au sein de la zone globale de garde.

On notera que l'invention permet de s'assurer que les cibles détectées sont bien des oiseaux en déplacement. Pour ce faire, lesdits radars 5 peuvent inclure l'activation d'une fonction de pistage (« trail »), à savoir la détection de la trace des échos perçus par le radar 5. Cette trace est ainsi plus perceptible qu'un simple point par le logiciel de détection de mouvement.

De plus, selon un mode opératoire additionnel, le procédé de détection selon l'invention consiste à positionner deux radars 5 de manière opposée selon un axe de symétrie horizontal passant par le pied du mât 3 de ladite éolienne 1.

De préférence, comme visible sur les figures 2 à 4, le procédé consiste à créer une image de référence de la zone de garde externe 7 en l'absence d'objet (figure 2), enclencher le ralentissement ou l'arrêt du mouvement des pales 2 de l'éolienne 1, dès détection d'un objet dans ladite zone de garde externe 7, grâce à un changement d'état de ladite image de référence (figure 3). Dès lors, après atteinte de la vitesse de sécurité recherchée ou l'arrêt de l'éolienne, on crée une image de référence de la zone de garde interne, et on maintient le ralentissement ou l'arrêt de ladite éolienne 1 tant qu'un nouvel objet est détecté dans la zone de garde interne 8 (figure 3) ou tant qu'un objet est détecté dans la zone de garde externe 7, dans les deux cas grâce au logiciel de détection de mouvement par changement d'état de l'images de référence correspondante.

Comme évoqué précédemment, en fonction des déplacements détectés ou au bout d'une période de temps déterminée, sans détection de mouvement dans l'une et/ou l'autre des zones de garde interne 8 et externe 7, un signal de redémarrage est envoyé à l'éolienne 1. Puis le système de détection revient à l'état initial de détection au sein de la zone de garde externe 7, selon la figure 2.

Selon d'autres caractéristiques additionnelles, des ajouts peuvent être réalisés à la détection selon l'invention, notamment par des mesures complémentaires, des modifications des caractéristiques des antennes d'émission et de réception des radars 5, ou bien au niveau du traitement informatique dynamique des zones de garde 7 et 8.

En particulier, les mesures complémentaires peuvent consister en une programmation du système de détection suivant différents paramètres : jour/nuit, heures, saisons, conditions météorologiques, probabilité d'occurrence des oiseaux.

Selon un mode particulier, des moyens d'enregistrement photo et vidéo, tel une caméra, peuvent être commandés de manière à se déclencher lors de la détection d'un oiseau et permettent d'enregistrer l'oiseau traversant la zone à risque pour un contrôle, voir une identification, ultérieurs.

Par ailleurs, les modifications des caractéristiques des antennes peuvent consister à augmenter la hauteur verticale du faisceau de chaque radar 5, permettant de rapprocher le radar 5 de l'éolienne 1. Bien que ce rapprochement présente l'inconvénient d'une diminution de la précision de détection, il réduit les longueurs et les coûts d'implantation, notamment liés au câblage.

Comme évoqué précédemment, cet aspect peut être combiné à une augmentation de la fréquence de récurrence pour augmenter la précision des échos.

De plus, toute ou partie des antennes rotatives émettrices desdits radars 5 peuvent être remplacées par des antennes fixes et jumelées dont l'addition des angles horizontaux et verticaux permet de couvrir l'ensemble de la zone globale de garde, limitant l'entretien lié à l'usure mécanique des moyens rotatifs, avec ou sans fusion des images obtenues pour chaque antenne émettrice.

Il est aussi possible de synchroniser de manière décalée les impulsions émises par les radars 5 afin d'éviter les échos parasites de réflexion.

Enfin, il est aussi envisageable d'émettre des ondes polarisées, une polarisation étant dédiée à chaque radar 5, affinant la qualité du signal reçu et réduisant les échos parasites ainsi que les interférences entre les radars 5.

Une autre modification peut résider dans l'évolution automatique de la forme et du positionnement des zones de garde, en particulier interne 8, en fonction de la position du rotor de l'éolienne 1. Pour ce faire, il est possible de connaître la position dudit rotor en fonction des conditions de fonctionnement, notamment la direction et la force du vent. L'espace balayé par les pales n'est plus alors une sphère 4 mais un ellipsoïde de rotation.

La détection selon l'invention est adaptable à tout type d'éolienne 1 et selon leurs conditions d'implantation, notamment le relief, dès lors où leur positionnement permet de jouer sur les distances entre les radars 5 et l'éolienne 1, ainsi que leur hauteur d'installation.

L'invention permet aussi de détecter toutes les espèces, en fonction de leur période de présence (oiseaux nicheurs ou migrateurs) et aux conditions de risque jouant sur la programmation de l'activité du système, suivant les périodes et les conditions climatiques et donc la probabilité d'occurrence des espèces. La sensibilité précise et réglable du système permet aussi de sélectionner les espèces en fonction de leurs dimensions.

De plus, l'invention est fixe, permanente et programmable suivant les probabilités d'occurrences des espèces à protéger.

Bien entendu, l'invention n'est pas limitée aux exemples illustrés et décrits précédemment qui peuvent présenter des variantes et modifications sans pour autant sortir du cadre de l'invention.

## Revendications

1. Procédé de détection d'objet volant, en particulier d'oiseau, au niveau d'une seule éolienne (1), dans lequel on utilise des moyens de détection d'au moins un oiseau ou autre objet volant par ondes radio, sous forme d'au moins deux radars (5), **caractérisé en ce qu'**il consiste à :
- positionner deux radars (5) indépendants l'un de l'autre (5) ;
- incliner chaque radar (5) sur son axe horizontal de sorte que la hauteur verticale du faisceau d'ondes (9) émis dans l'axe de ladite éolienne (1) par chaque radar (5) englobe toute ou partie d'une sphère (4) constituée par le volume théorique de balayage des pales en rotation de l'éolienne (2) ;
- transformer l'image analogique résultante en deux dimensions de chaque radar (5) en une image digitale indépendante pour chaque radar (5) ;
- appliquer sur chaque image digitale de chaque radar (5), d'une part, une zone de garde externe (7), en deux dimensions dont le centre est positionné sur le centre de la sphère (4) et les dimensions sont supérieures à celles de ladite sphère (4) et, d'autre part, une zone de garde interne (8) de dimensions inférieures ou égales à celles de ladite sphère (4), créant un volume de garde pour chaque radar (5), les limites de ce volume étant alors la projection, perpendiculairement à la médiane de l'angle vertical du faisceau d'ondes émis par le radar (5), des limites en deux dimensions définies sur cette même médiane, sur les limites externes en trois dimensions du même faisceau ;
- positionner et régler indépendamment chaque radar (5) à une distance de l'éolienne (1) de sorte que les zones de garde (7, 8) de chaque radar (5) se complètent en fonction de la zone globale de garde constituée par la somme des zones de garde respectives. (7,8) de chaque radar (5), cette zone globale de garde étant de dimensions moindres que l'espace total balayé par lesdits radars (5);
- en l'absence d'objet, créer une image de référence de la zone de garde externe (7) ;
- effectuer une action d'arrêt ou de ralentissement de ladite éolienne (1) dès la détection d'un objet volant au sein de ladite zone de garde externe (7), par un changement d'état de ladite image de référence de ladite zone de garde externe (7) ;
- dès l'atteinte d'une vitesse de sécurité ou arrêt du mouvement des pales de l'éolienne, créer une image de référence de la zone de garde interne (8) ;
- maintenir l'arrêt ou le ralentissement de l'éolienne (1) tant qu'un nouvel objet est détecté dans la zone de garde interne (8), par un changement d'état de ladite image de référence de ladite zone de garde interne (8) ;
- commander le redémarrage de l'éolienne (1) dès lors qu'aucun n'objet n'est détecté au sein de la zone globale de garde.

2. Procédé de détection selon la revendication 1, **caractérisé en ce qu'**il consiste à positionner chaque radar (5) en hauteur sur un pylône (6).

3. Procédé de détection selon les revendications précédentes, **caractérisé en ce qu'**il consiste à utiliser pour chaque radar (5) un radar de type « marine », de type radar rotatif en bande X, S ou L.

4. Procédé de détection selon les revendications 1 à 2, **caractérisé en ce qu'**il consiste à utiliser pour les radars (5) des antennes fixes jumelées.

5. Procédé de détection selon les revendications précédentes, **caractérisé en ce que** le réglage desdits radars (5) consiste à réduire la longueur d'impulsion pour que la demi-longueur d'impulsion de chaque radar (5) soit inférieure ou égale à la plus courte distance entre ledit radar (5) et le périmètre externe de la zone de garde externe (7) dudit radar (5).

6. Procédé de détection selon l'une quelconque des revendications précédentes, **caractérisé en ce qu'**il consiste à effectuer des mesures complémentaires sous forme d'une programmation du système de détection suivants différents paramètres : jour/nuit, heures, saisons, conditions météorologiques ou probabilité d'occurrence des oiseaux, ou bien effectuer un enregistrement vidéo.

7. Procédé de détection selon l'une quelconque des revendications précédentes, **caractérisé en ce qu'**il consiste à émettre des ondes polarisées.

## Patentansprüche

1. Verfahren zum Detektieren eines fliegenden Gegenstands, insbesondere eines Vogels im Bereich einer Einzelwindkraftanlage (1), bei welchem Mittel zum Detektieren von zumindest einem Vogel oder einem anderen fliegenden Gegenstand durch Funkwellen in Form von zumindest zwei Radargeräten (5) benutzt werden, **dadurch gekennzeichnet, dass** es darin besteht,
- zwei voneinander unabhängige Radargeräte (5) zu positionieren;
- jedes Radargerät (5) auf seiner horizontalen Achse schräg zu stellen, derart, dass die vertikale Höhe des Wellenbündels (9), das in der Achse der besagten Windkraftanlage (1) von jedem Radargerät (5) ausgesendet wird, ganz oder teilweise das Umfeld (4), das durch den theoretischen Abtastungsumfang bei Drehung der Rotorblätter der Windkraftanlage (2) gebildet ist, einschließt;
- das sich ergebende zweidimensionale analoga Bild von jedem Radargerät (5) in ein unabhängiges digitales Bild für jedes Radargerät (5) umzuwandeln;
- auf jedes digitale Bild von jedem Radargerät (5), einerseits, einen zweidimensionalen äußeren Schutzbereich (7), dessen Zentrum in dem Zentrum des Umfelds (4) positioniert ist und die Abmessungen größer als jene des Umfelds (4) sind, und, andererseits, einen inneren Schutzbereich (8) mit Abmessungen, die kleiner als oder gleich groß wie jene des besagten Umfelds (4) sind, anzulegen, wobei ein Bewachungsumfang für jedes Radargerät (5) gestaltet wird, wobei die Grenzen dieses Umfangs dann die Projektion, senkrecht zu der Mittellinie des vertikalen Winkels des durch das Radargerät ausgesendeten Wellenbündels (5), der zweidimensionalen Grenzen, die auf derselben Mittellinie gebildet sind, auf den dreidimensionalen äußeren Grenzen desselben Bündels seien;
- jedes Radargerät (5) unabhängig in einer Entfernung von der Windkraftanlage (1) zu positionieren und einzustellen, derart, dass die Schutzbereiche (7, 8) von jedem Radargerät (5) sich in Abhängigkeit von dem gesamten eingeschlossenen Schutzbereich ergänzen, der aus der Summe der entsprechenden Schutzbereiche (7, 8) von jedem Radargerät (5) gebildet ist, wobei dieser gesamte eingeschlossene Schutzbereich geringere Abmessungen aufweise als das durch die besagten Radargeräte (5) durchsuchte Gesamtumfeld;
- bei Nichtvorhandensein eines Gegenstands ein Referenzbild des äußeren Schutzbereichs (7) zu erstellen;
- eine Wirkung zum Zum-Stillstand-Bringen oder Verlangsamen der besagten Windkraftanlage (1) durch eine Zustandsänderung des besagten Referenzbildes des besagten äußeren Schutzbereichs (7) bei der Detektion eines fliegenden Gegenstands innerhalb des besagten äußeren Schutzbereichs (7) auszuüben;
- beim Erreichen einer sicheren Geschwindigkeitsgrenze oder beim Zum-Stillstand-Kommen der Bewegung der Rotorblätter der Windkraftanlage ein Referenzbild des inneren Schutzbereichs (8) zu erstellen,
- das Stoppen oder die Verlangsamung der Windkraftanlage (1) durch eine Zustandsänderung des Referenzbildes des inneren Schutzbereichs (8) aufrechtzuerhalten, sobald ein neues Gegenstand in dem inneren Schutzbereich (8) detektiert ist;
- das Wiederstarten der Windkraftanlage (1) zu steuern, sobald kein Gegenstand innerhalb des gesamten eingeschlossenen Schutzbereichs detektiert ist.

2. Verfahren zum Detektieren nach Aspruch 1, dadurch gekenntzeichnet, dass es darin besteht, jedes Radargerät (5) in der Höhe an einem Mast (6) zu positionierten.

3. Verfahren zum Detektieren nach den vorgehenden Ansprüchen, **dadurch gekennzeichnet, dass** es darin besteht, für jedes Radargerät (5) ein Schiffsradar, ein X-, S-oder L-Band-Drehradar zu verwenden.

4. Verfahren zum Detektieren nach den Ansprüchen 1 bis 2, dadurch gekenntzeichnet, dass es darin besteht, fest ausgerichtete Zwillingsantennen für die Radargeräte (5) zu verwunden.

5. Verfahren zum Detektieren nach den vorgehenden Ansprüchen, **dadurch gekennzeichnet, dass** die Einstellung der besagten Radargeräte (5) darin besteht, die Impulslänge zu reduzieren, so dass die Halblänge des Impulses von jedem Radargerät (5) kleiner als oder gleich groß wie der kürzeste Abstand zwischen dem besagten Radargerät (5) und dem äußeren Umkreis des äußeren Schutzbereichs (7) des besagten Radargeräts (5) sei.

6. Verfahren zum Detektieren nach irgendeinem der vorgehenden Ansprüche, **dadurch gekennzeichnet, dass** es darin besteht, zusätzliche Messungen in Form von einer Programmierung des Systems zum Detektieren folgend verschiedenen Parametern: Tag-und-Nacht-Zyklus, Uhrzeiten, Jahreszeiten, Wetterbedingungen oder Wahrscheinlichkeit zum Auftreten von Vögeln vorzunehmen oder eine Videoaufzeichnung durchzuführen.

7. Verfahren zum Detektieren nach irgendeinem der vorgehenden Ansprüche, **dadurch gekennzeichnet, dass** es darin besteht, polarisierte Wellen auszusenden.

## Claims

1. Method for detecting a flying object, in particular a bird, at the level of one single wind power plant (1), in which means for detecting at least one bird or another flying object through radio waves, in the form of at least two radars (5), are used, wherein it consists in,
- positioning two radars (5) independent from each other;
- inclining each radar (5) on its horizontal axis such that the vertical height of the wave beam (9) emitted in the axis of said wind power plant (1) by each radar (5) entirely or partially includes a sphere (4) formed by the theoretical scanning volume of the rotating blades of the wind power plant (2);
- transforming the resulting two-dimensional analogue image of each radar (5) into an independent digital image for each radar (5);
- applying on each digital image of each radar (5), on the one hand, a two-dimensional outer observation area (7), the centre of which is positioned in the centre of the sphere (4) and the dimensions of which are larger than those of said sphere (4), and, on the other hand, an inner observation area (8) with dimensions smaller than or equal to those of said sphere (4), thus creating an observation volume for each radar (5), the limits of this volume being then the projection, perpendicular to the median line of the vertical angle of the wave beam emitted by the radar (5), of the two-dimensional limits defined on this very median line, on the three-dimensional outer limits of the same beam;
- positioning and adjusting independently each radar (5) at a distance from the wind power plant (1) such that the observation areas (7, 8) of each radar (5) complement each other depending on the global observation area formed of the sum of the respective observation areas (7, 8) of each radar (5), this global observation area having smaller dimensions than the total space scanned by said radars (5);
- in the absence of an object, creating a reference image of the outer observation area (7);
- performing a stop or slowing-down action of said wind power plant (1) as soon as a flying object is detected within the outer observation area (7), by a change of the state of said reference image of said outer observation area (7);
- as soon as a safety speed or a stop of the mouvement of the blades of the wind power plant is reached, creating a reference image of the inner observation area (8);
- maintaining the stop or the slowing-down of the wind powder plant (1) as long as a knew object is detected in the inner observation area (8), by a change of the state of said reference image of said inner observation area (8);
- controlling the restart of the wind power plant (1), as soon as no object is detected within the global observation area.

2. Method for detecting according to claim 1, wherein it consists in positioning each radar (5) in height on a mast (6).

3. Method for detecting according to the preceding claims, wherein it consists in using for each radar (5) a "marine" type radar, a X-, S- or L-band rotary radar.

4. Method for detecting according to claims 1 to 2, wherein it consists in using fixed twin antennas for the radars (5).

5. Method for detecting according to the preceding claims, wherein the adjustment of said radars (5) consists in reducing the pulse length such that the half pulse length of each radar (5) is smaller than or equal to the smallest distance between said radar (5) and the outer perimeter of the outer observation area (7) of said radar (5).

6. Method for detecting according to any of the preceding claims, wherein it consists in performing complementary measurements in the form of a programming of the system for detecting according to different parameters: day/night, hours, seasons, meteorological conditions or likeliness of presence of birds, or making a video record.

7. Method for detecting according to any of the preceding claims, wherein it consists in emitting polarized waves.
